# DEMANDE DE BREVET EUROPEEN

(11) **EP 0 996 283 A1**
(43) Date de publication de la demande: **26.04.2000**
(21) Numéro de dépôt: 98440232.1
(22) Date de dépôt: 23.10.1998
(51) Int. Cl.: H04N 5/232

(54) **Dispositif d'asservissement à distance d'une caméra**

(71) Demandeur: ALCATEL, 75008 Paris (FR)
(72) Inventeur: La désignation de l'inventeur n'a pas encore été déposée
(74) Mandataire: Scheer, Luc

(57) **Abrégé**

La présente invention a pour objet un dispositif d'asservissement à distance d'une caméra de prise de vue, notamment du type caméra vidéo, reliée à un écran de visualisation.

Dispositif caractérisé en ce qu'il comprend essentiellement des moyens (4, 5) relevant l'orientation et la position tridimensionnelle relatives de la tête (3) et/ou des yeux (3') d'un utilisateur par rapport à l'écran de visualisation (2) pour déterminer automatiquement la position en rotation autour de deux axes sensiblement orthogonaux entre eux, par exemple un axe vertical (2) et un axe horizontal (4), et le réglage de focale de ladite caméra de prise de vue (1), une modification de l'orientation et/ou de la position tridimensionnelle de la tête (3) ou des yeux (3') de l'utilisateur par rapport audit écran de visualisation (2) entraînant automatiquement et en temps réel une modification similaire du ou des paramètre(s) de positionnement et/ou de réglage correspondant(s) de ladite caméra de prise de vue (1).

## Description

La présente invention concerne le domaine de la commande à distance d'un dispositif de prise de vue, notamment dans le contexte d'un système dit de "téléprésence", et a pour objet un dispositif d'asservissement à distance d'une caméra.

En vue d'afficher toutes les informations visuelles possibles sur l'écran de visualisation d'un utilisateur, une caméra télécommandée peut changer son angle de vue et son champ de vision principalement par l'intermédiaire de trois actionnements, à savoir, son orientation horizontale (vision panoramique/azimut), son orientation verticale (inclinaison ou élévation) et son réglage de focale ou de "zoom".

Ces différents types d'actionnement peuvent être explicitement télécommandés par l'utilisateur téléspectateur par l'intermédiaire de manettes de commande ou d'autres systèmes de contrôle reliés à des actionneurs correspondants et qui nécessitent l'usage d'au moins une main dudit utilisateur, une attention soutenue de ce dernier et un entraînement préalable pour aboutir à des résultats acceptables.

Les nécessités précitées sont particulièrement contraignantes dans le cadre de systèmes dits de "téléprésence" dont le but est de permettre à l'utilisateur d'avoir une vision d'une qualité et d'une adaptabilité telles qu'il ait la sensation de se trouver sur place, c'est-à-dire sur le lieu distant filmé.

Différents dispositifs de commande automatique à distance de certaines fonctions d'une caméra sont déjà connus. Ainsi, le réglage de la résolution en fonction de la direction du regard est par exemple connu du document US-A-4 513 317 et par le document US-A-4 303 394, on connaît un système de déplacement automatique de la caméra en fonction des mouvements de rotation de la tête et des mouvements oculaires.

Toutefois, ces dispositifs connus ne permettent pas de reproduire les propriétés et les caractéristiques d'une vision "naturelle", tenant compte des déplacements et des mouvements des individus pour modifier leur champ de vision, le cas échéant en les améliorant.

En outre, ces dispositifs connus soit n'autorisent pas une grande liberté de mouvements ou ne confèrent pas un confort optimal à l'utilisateur, du fait, par exemple, de la nécessité d'une liaison physique de ce dernier avec le dispositif concerné ou du port d'un équipement par l'utilisateur, soit produisent des images qui se différencient trop de celles produites par la vision normale d'un individu pour permettre à ce dernier de se sentir "sur place".

Par ailleurs, les dispositifs connus présentent généralement une structure et un fonctionnement complexes.

La présente invention a notamment pour objet de pallier certains des inconvénients précités.

A cet effet, elle a pour objet un dispositif d'asservissement à distance d'une caméra de prise de vue, notamment du type caméra vidéo, reliée à un écran de visualisation, caractérisé en ce que ledit dispositif d'asservissement comprend essentiellement des moyens relevant l'orientation et la position tridimensionnelle relatives de la tête et/ou des yeux d'un utilisateur par rapport à l'écran de visualisation pour déterminer automatiquement la position en rotation autour de deux axes sensiblement orthogonaux entre eux, par exemple un axe vertical et un axe horizontal, et le réglage de focale de ladite caméra de prise de vue, une modification de l'orientation et/ou de la position tridimensionnelle de la tête ou des yeux de l'utilisateur par rapport audit écran de visualisation entraînant automatiquement et en temps réel une modification similaire du ou des paramètre(s) de positionnement et/ou de réglage correspondant(s) de ladite caméra de prise de vue.

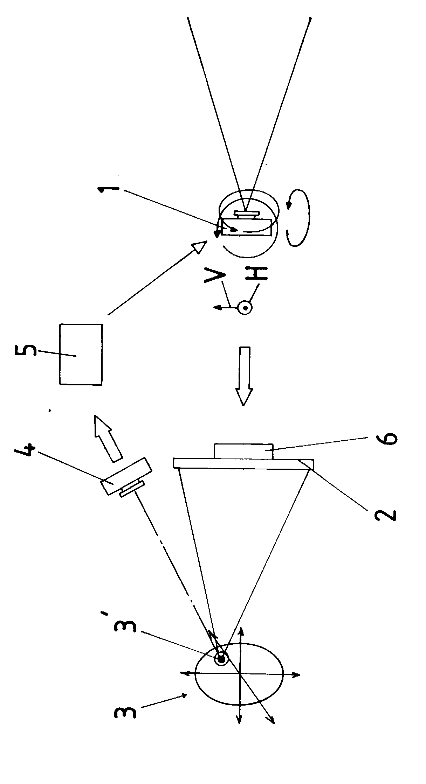

L'invention sera mieux comprise, grâce à la description ci-après, qui se rapporte à un mode de réalisation préféré, donné à titre d'exemple non limitatif, et expliqué avec référence au dessin annexé, dont la figure unique représente schématiquement les éléments constitutifs principaux du dispositif conforme à l'invention selon un mode de réalisation préférentiel.

Comme le montre la figure annexée, le dispositif d'asservissement comprend essentiellement des moyens 4, 5 relevant l'orientation et la position tridimensionnelle relatives de la tête 3 et/ou des yeux 3' d'un utilisateur par rapport à l'écran de visualisation 2 pour déterminer automatiquement la position en rotation autour de deux axes sensiblement orthogonaux entre eux, par exemple un axe vertical 2 et un axe horizontal 4, et le réglage de focale de ladite caméra de prise de vue 1, une modification de l'orientation et/ou de la position tridimensionnelle de la tête 3 ou des yeux 3' de l'utilisateur par rapport audit écran de visualisation 2 entraînant automatiquement et en temps réel une modification similaire du ou des paramètre(s) de positionnement et/ou de réglage correspondant(s) de ladite caméra de prise de vue 1.

De manière avantageuse, le réglage de focale de la caméra de prise de vue 1 est effectué en fonction de la distance entre la tête 3 ou les yeux 3' de l'utilisateur et l'écran de visualisation 2.

Ainsi, conformément à l'invention, les mouvements de la tête 3 et/ou des yeux 3' de l'utilisateur sont décomposés en modifications de l'orientation et de la position tridimensionnelle de la tête 3 et/ou des yeux 3' de l'utilisateur relativement à l'écran de visualisation 2, ces derniers étant ensuite transformés en mouvements de rotations autour d'axes, par exemple vertical V et horizontal H, et en variations de réglage de focale de la caméra de prise de vue 1.

La solution proposée par l'invention consiste donc à suivre les déplacements de la tête 3 et/ou des yeux 3' de l'utilisateur et à déterminer en temps réel l'angle de vision local selon lequel l'utilisateur voit l'écran de visualisation 2. Cet angle de vision est ensuite interprété et transmis en termes de signaux de commande d'azimut, d'élévation et de "zoom" à la caméra de prise de vue 1, de manière à fournir un asservissement en temps réel entre les mouvements de l'utilisateur et l'image projetée sur l'écran de visualisation 2.

Ainsi, l'utilisateur a la possibilité, grâce au dispositif d'asservissement selon l'invention, de bénéficier de l'ensemble des possibilités de prise de vue offertes par la caméra 1, en se déplaçant simplement devant l'écran de visualisation 2, comme il le ferait s'il y avait une fenêtre physique s'ouvrant sur et permettant la vision du lieu distant filmé par ladite caméra 1.

En outre, l'utilisation du dispositif selon l'invention ne nécessite, compte tenu de sa similitude de réaction avec la vision naturelle des individus et de sa simplicité d'utilisation, aucun apprentissage préalable.

Selon un mode de réalisation préférentiel de l'invention, représenté également à la figure des dessins annexés, le dispositif d'asservissement est principalement constitué, d'une part, par une caméra 4 dirigée sur la tête 3 de l'utilisateur et adaptée pour suivre cette dernière, d'autre part, par un module 5 de détection de l'orientation et de la position tridimensionnelle de la tête 3 et/ou des yeux 3' de l'utilisateur, et des modifications de celle(s)-ci, traitant les images fournies par ladite caméra 4 et, enfin, par des actionneurs commandés par ledit module 5 et contrôlant la position angulaire horizontale et verticale, ainsi que le réglage de focale, de ladite caméra de prise de vue 1 (non représentés sur la figure annexée).

Le dispositif d'asservissement selon l'invention pourra être réglé de telle manière que l'image affichée par l'écran de visualisation 2 soit modifiée proportionnellement aux mouvements de l'utilisateur, à l'instar de la modification de la vision directe d'un individu en fonction des mouvements de ses yeux 3' et/ou de sa tête 3.

Toutefois, ledit dispositif d'asservissement pourra également être réalisé de telle manière que les modifications de l'orientation et de la position tridimensionnelle de la tête 3 et des yeux 3' de l'utilisateur entraînent une modification similaire amplifiée ou minimisée du ou des paramètre(s) correspondant(s) de positionnement de la caméra de prise de vue 1, notamment dans des plages de rotations angulaires autour des deux axes V et H s'étendant au-delà des possibilités physiques de l'utilisateur.

Ainsi, il sera possible, avec des mouvements de rotation ou de pivotement limités de la tête 3 de l'utilisateur, d'effectuer un balayage horizontal ou vertical jusqu'à 360 degrés avec la caméra de prise de vue 1. De plus, l'ensemble caméra de prise de vue/écran de visualisation pourra fournir à l'utilisateur des images dont le grossissement et la résolution peuvent être nettement supérieurs aux possibilités physiques de l'oeil humain.

Afin d'augmenter encore le confort visuel de l'utilisateur, le dispositif d'asservissement peut, en outre, comprendre des moyens 6 de déplacement et d'orientation automatiques de l'écran de visualisation 2 à partir d'une position de référence associée à une position de référence de la tête 3 et/ou des yeux 3' de l'utilisateur, coopérant avec les moyens 4, 5 relevant l'orientation et la position tridimensionnelle relatives de la tête 3 et/ou des yeux 3' de l'utilisateur, de manière à conserver ledit écran de visualisation 2 centré par rapport au champ de vision et perpendiculaire à la direction du regard de ce dernier, quelles que soient l'orientation et la position de la tête 3 et/ou des yeux 3' dudit utilisateur.

Cette caractéristique supplémentaire permet également de fournir un signal de rétroaction amplifié en ce qui concerne l'état du module 5 et d'envisager des terminaux de "téléprésence" couvrant 360 degrés, qui pourraient être installés au centre de bureaux ou de salles de réunion.

La conception et la réalisation pratiques des moyens 4, 5 et 6 sont à la portée de l'homme du métier, sur la base notamment des enseignements fournis par les deux documents US cités précédemment.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Dispositif d'asservissement à distance d'une caméra de prise de vue, notamment du type caméra vidéo, reliée à un écran de visualisation, caractérisé en ce que ledit dispositif d'asservissement comprend essentiellement des moyens (4, 5) relevant l'orientation et la position tridimensionnelle relatives de la tête (3) et/ou des yeux (3') d'un utilisateur par rapport à l'écran de visualisation (2) pour déterminer automatiquement la position en rotation autour de deux axes sensiblement orthogonaux entre eux, par exemple un axe vertical (2) et un axe horizontal (4), et le réglage de focale de ladite caméra de prise de vue (1), une modification de l'orientation et/ou de la position tridimensionnelle de la tête (3) ou des yeux (3') de l'utilisateur par rapport audit écran de visualisation (2) entraînant automatiquement et en temps réel une modification similaire du ou des paramètre(s) de positionnement et/ou de réglage correspondant(s) de ladite caméra de prise de vue (1).

2. Dispositif selon la revendication 1, caractérisé en ce que le réglage de focale de la caméra de prise de vue (1) est effectué en fonction de la distance entre la tête (3) ou les yeux (3') de l'utilisateur et l'écran de visualisation (2).

3. Dispositif selon l'une quelconque des revendications 1 et 2, caractérisé en ce que les mouvements de la tête (3) et/ou des yeux (3') de l'utilisateur sont décomposés en modifications de l'orientation et de la position tridimensionnelle de la tête (3) et/ou des yeux (3') de l'utilisateur relativement à l'écran de visualisation (2), ces derniers étant ensuite transformés en mouvements de rotations autour d'axes, par exemple vertical (V) et horizontal (H), et en variations de réglage de focale de la caméra de prise de vue (1).

4. Dispositif selon l'une quelconque des revendications 1 à 3, caractérisé en ce qu'il est principalement constitué, d'une part, par une caméra (4) dirigée sur la tête (3) de l'utilisateur et adaptée pour suivre cette dernière, d'autre part, par un module (5) de détection de l'orientation et de la position tridimensionnelle de la tête (3) et/ou des yeux (3') de l'utilisateur, et des modifications de celle(s)-ci, traitant les images fournies par ladite caméra (4) et, enfin, par des actionneurs commandés par ledit module (5) et contrôlant la position angulaire horizontale et verticale, ainsi que le réglage de focale, de ladite caméra de prise de vue (1).

5. Dispositif selon l'une quelconque des revendications 1 à 4, caractérisé en ce que les modifications de l'orientation et de la position tridimensionnelle de la tête (3) et des yeux (3') de l'utilisateur entraînent une modification similaire amplifiée du ou des paramètre(s) correspondant(s) de positionnement de la caméra de prise de vue (1), notamment dans des plages de rotations angulaires autour des deux axes (V et H) s'étendant au-delà des possibilités physiques de l'utilisateur.

6. Dispositif selon l'une quelconque des revendications 1 à 5, caractérisé en ce qu'il comporte également des moyens (6) de déplacement et d'orientation automatiques de l'écran de visualisation (2) à partir d'une position de référence associée à une position de référence de la tête (3) et/ou des yeux (3') de l'utilisateur, coopérant avec les moyens (4, 5) relevant l'orientation et la position tridimensionnelle relatives de la tête (3) et/ou des yeux (3') de l'utilisateur, de manière à conserver ledit écran de visualisation (2) centré par rapport au champ de vision et perpendiculaire à la direction du regard de ce dernier, quelles que soient l'orientation et la position de la tête (3) et/ou des yeux (3') dudit utilisateur.
